# EUROPEAN PATENT SPECIFICATION

(11) **EP 1 565 312 B1**
(45) Date of publication and mention of the grant of the patent: **21.12.2011**
(21) Application number: 03786786.8
(22) Date of filing: 17.11.2003
(51) Int. Cl.: B32B 27/12, B32B 27/36, D04H 3/00, D04H 1/00, D04H 13/00, D04H 5/00

(54) **THERMAL BONDABLE FILM FOR INSULATION FACING, AND METHOD FOR MAKING THE SAME**
THERMISCH VERSCHWEISSBARE FOLIE ZUR VERWENDUNG ALS ISOLIERVERKLEIDUNG UND VERFAHREN ZUR HERSTELLUNG DERSELBEN
FILM COLLE PAR ACTION THERMIQUE DESTINE A ISOLER DES SURFACES AVANT ET PROCEDE DE FABRICATION CORRESPONDANT

(30) Priority: 20.11.2002 US 300352
(43) Date of publication of application: 24.08.2005
(73) Proprietor: DuPont Teijin Films U.S. Limited Partnership, Chester, VA 23836 (US)
(72) Inventor: COSENTINO, Steven, R., Quinton, VA 23141 (US)
(74) Representative: Cockerton, Bruce Roger
(86) International application number: PCT/US2003/036722
(87) International publication number: WO 2004/045848

(56) References cited:
- DE-A1- 19 543 727
- JP-A- 62 204 426
- US-A- 5 147 698
- US-B1- 6 335 479

## Description

### FIELD OF THE INVENTION

This invention relates to thermal insulation materials. More specifically, it relates to vapor barriers with one or more thermally bondable layers attached to a reinforcing layer, and thermal insulation materials employing these vapor barriers.

### BACKGROUND OF THE INVENTION

Insulation products are widely used in commercial and residential buildings, to afford a comfortable environment for inhabitants and to reduce expenses relating to heating and air conditioning. A commonly used product for such applications comprises a low-density batt of fibrous material, typically spun fiberglass or the like, which may be adhered to a facing. The facing, which typically consists of kraft paper and asphalt, serves the purpose of affording some tensile and tear strength to the batt, which is typically of very low structural strength. A layer of tear-resistant material ("scrim") is sometimes bonded to the facing to afford increased tensile and tear strength.

The facing may also provide some level of water vapor transmission resistance, typically measured as Water Vapor Transmission Rate (WVTR), wherein a low WVTR value indicates low permeability to water vapor. In typical constructions however the ability of the product to resist penetration by water vapor is very low, which can be especially detrimental in humid environments. Additionally, there are sometimes problems with the structural integrity of the facing material under conditions of aging. Especially in hot environments, such as in an attic, the commonly used kraft paper and asphalt facing materials are prone to degradation over time, with resultant loss of strength and reduction in barrier properties. Moreover, asphalt coated kraft is brittle in cold weather and sticky in hot weather, both of which hinder installation of the product.

Polyethylene films are sometimes used in combination with kraft paper for facing materials, in order to decrease water vapor transmission. It is also known to decrease water vapor transmission by combining a foil, typically aluminum, with kraft paper and optionally a scrim. Such foil-scrim-kraft (FSK) facings are in common use. Such products however typically suffer from poor aging performance, poor corrosion resistance, and poor puncture resistance, due to the use of kraft paper and aluminum foil. Additionally, production of FSK can be costly because foil has to be adhesive-laminated to scrim, then scrim to kraft, before the entire assembly can be adhered to batt to make a thermal insulation product.

For some applications, it is desirable to provide a level of water vapor transmission intermediate between what can be obtained with kraft paper and what can be provided by polyethylene or other facing materials. For example, an insulation product having a facing with higher WVTR can be useful in applications where the insulation is being added to augment a previously installed insulation layer having lower WVTR. In such a case the higher WVTR of the augmenting layer may serve to prevent moisture condensation within the insulation. Thus there is a need for thermal insulation products having facings of different WVTR values.

A traditional way of meeting this need is to use different materials for the facing, as described above. It will be appreciated however that the need to keep different materials on hand at a manufacturing facility is harmful to cost-effective production, and may indeed even require modifications in equipment to handle the different materials. Both of these are economically disadvantageous in a manufacturing operation. It would therefore be desirable to make facings of different WVTR, and insulation products incorporating them, by making only relatively minor changes to a given set of starting materials. It would be especially desirable if such a process also allowed the preparation of vapor barriers having very low water vapor transmission rates, thereby providing an essentially moisture-impermeable barrier.

Also known are facings wherein a polypropylene film or a polyvinyl chloride film is adhered with a water-based laminating adhesive to one side of a fiberglass scrim, while the other side of the scrim is adhered with a water-based laminating adhesive to the metal side of a metalized polyester film. Further, facings are known in which a blended polyester/fiberglass fabric is adhered with a water-based laminating adhesive to the metal side of a metalized polypropylene film. However, these (and all of the foregoing) facings require separate adhesive coating and laminating steps to combine the layers, complicating their manufacture and thereby increasing cost. There is a need to simplify the process and eliminate layers and separate process operations. DE 19543727 discloses a transparent composite thermal insulation system comprising a panel of PET adhesively bonded over thermal insulating material with reinforcing glass interlayer, and employed in walls of new or existing building.

Thus there continues to be a need for thermal insulation products incorporating facings covering a range of permeabilities, and processes for making them that require fewer adhesive coating operations.

### SUMMARY OF THE INVENTION

In one aspect of the invention, there is provided a multilayer barrier assembly comprising a first barrier portion. The first barrier portion comprises a first biaxially oriented polyethylene terephthalate layer, a first thermal bonding layer adjacent and substantially coextensive with the first barrier portion, and a fibrous reinforcing layer adjacent and substantially coextensive with the first thermal bonding layer. The fibrous reinforcing layer has a basis weight from about 5 g/m² to about 30 g/m². The first thermal bonding layer comprises a first bonding material having a glass transition temperature that is lower than a glass transition temperature of the first biaxially oriented polyethylene terephthalate layer.

In another aspect of the invention, there is provided a multilayer barrier assembly as described immediately above, further comprising an adhesive layer adjacent and substantially coextensive with one of the first barrier portion and the fibrous reinforcing layer; and a fibrous thermal insulation layer adjacent and substantially coextensive with the adhesive layer.

In still another aspect of the invention, there is provided a method for making a multilayer barrier assembly comprising the steps of:
forming a film composite comprising a first barrier portion that comprises a first biaxially oriented polyethylene terephthalate layer, and a first thermal bonding layer adjacent and substantially coextensive with the first barrier portion, the first thermal bonding layer comprising a first bonding material having a glass transition temperature that is lower than a glass transition temperature of the first biaxially oriented polyethylene terephthalate layer;
positioning a fibrous reinforcing layer over the first thermal bonding layer, the fibrous reinforcing layer having a basis weight from about 5 g/m² to about 30 g/m²; and
applying heat and pressure to bond together the film composite and the fibrous reinforcing layer to form a vapor barrier assembly.

In a further aspect of the invention, there is provided a method as described immediately above, further comprising:
positioning an adhesive on a surface of the vapor barrier assembly;
positioning a thermal insulation batt adjacent and substantially coextensive with the adhesive on the surface of the vapor barrier assembly; and
applying pressure to effect adhesion between the batt and the vapor barrier assembly.

### BRIEF DESCRIPTION OF DRAWINGS

Figure 1 is a schematic cross sectional representation of a vapor barrier assembly having a one-layer barrier portion, in accordance with this invention.
Figure 2 is a cross sectional representation of an apparatus suitable for preparing a vapor barrier assembly similar to that depicted in Figure 1.
Figure 3 is a schematic cross sectional representation of a vapor barrier assembly having a two-layer barrier portion, in accordance with this invention.
Figure 4 is a schematic cross sectional representation of a vapor barrier assembly having two barrier portions, one of which comprises two barrier layers, in accordance with this invention.
Figure 5 is a schematic cross sectional representation of a vapor barrier assembly having two barrier portions, both of which comprise two barrier layers, in accordance with this invention.
Figure 6 is a schematic cross sectional representation of a thermal insulation product having a fibrous thermal insulation layer adhered to the barrier side of a vapor barrier assembly similar to that of Figure 1, in accordance with this invention.
Figure 7 is a schematic cross sectional representation of a thermal insulation product similar to that of Figure 6, but with the fibrous thermal insulation layer adhered to the opposite side of the vapor barrier assembly, in accordance with this invention.
Figure 8 is a schematic cross sectional representation of a thermal insulation product similar to that of Figure 7, but with the barrier portion comprising two barrier layers, in accordance with this invention.
Figure 9 is a schematic cross sectional representation of a thermal insulation product having a fibrous thermal insulation layer adhered to the barrier side of a vapor barrier assembly similar to that of Figure 4, in accordance with this invention.

### DETAILED DESCRIPTION OF THE INVENTION

The invention will next be illustrated with reference to the figures, wherein the same numbers indicate the same elements in all figures. Such figures are intended to be illustrative rather than limiting and are included herewith to facilitate the explanation of the invention. The figures are not to scale, and are not intended as engineering drawings.

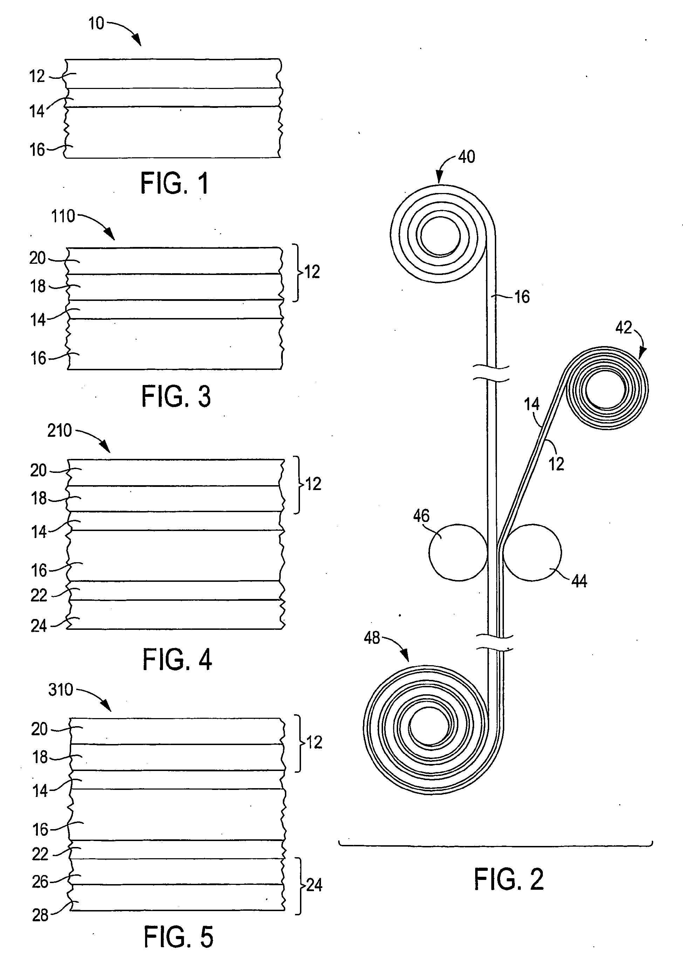

Figures 1 and 3 - 9 all show multilayer barrier assemblies in cross sectional view, and do not indicate the length or width of the items depicted. Such dimensions are not critical to this invention, and the items may be of essentially any convenient shape or size. Typically, multilayer barrier assemblies according to the invention will be of an elongated rectangular shape suitable for installation between structural elements such as joists, rafters, and the like in buildings, thereby affording thermal insulation with a water vapor barrier capability. They may also be used for other insulating applications, such as for instance wrapping and insulating pipes, tanks, etc. Multilayer barrier assemblies according to the invention may be vapor barrier assemblies, or they may be thermal insulation products in which such vapor barrier assemblies are used in conjunction with a fibrous thermal insulation layer.

Referring now to Figure 1, there is shown a cross sectional view of a vapor barrier assembly indicated generally at 10, according to the invention, suitable for use in a thermal insulation product. Assembly 10 comprises a first barrier portion 12, a first thermal bonding layer 14 on one surface of barrier portion 12, and a fibrous reinforcing layer 16 bonded to first thermal bonding layer 14. All three layers are substantially coextensive.

First barrier portion 12 may consist of a single layer, as shown in Figure 1. Such a layer typically has a thickness from about 5 µm to about 500 µm, preferably from about 12 µm to about 40 µm, still more preferably from about 12 µm to about 24 µm. First thermal bonding layer 14, if it is a coextruded polyester (to be described below), may constitute from about 5% to about 60% of the combined thickness of first barrier portion 12 and first thermal bonding layer 14, preferably from about 10% to about 40%. If first thermal bonding layer 14 is a coated adhesive such as for example an ethylene-vinyl acetate copolymer, it may be applied at a loading level of from about 2 to about 30 g/m², preferably from about 5 to about 15 g/m².

First barrier portion 12 may be produced from a linear polyester. Typically the linear polyester will have an intrinsic viscosity from about 0.5 to about 0.8, with about 0.6 being most typical. Preferred polyester films are biaxially oriented polyethylene terephthalate (PET) film and biaxially oriented polyethylene naphthalate (PEN) film.

Especially useful is polyethylene terephthalate that has been biaxially oriented and heatset. Such a material is well known in the art, and is described for example in U. S. Pat. No. 4,375,494 to Stokes.

Polyethylene terephthalate polymer preparation techniques are well known to those skilled in the art and are disclosed in many texts, such as Encyclopedia of Polymer Science and Engineering, 2nd. Ed., Vol. 12, Wiley, N.Y., pp. 1-313. The polymer is typically obtained by condensing the appropriate dicarboxylic acid or its lower alkyl diester with ethylene glycol. Polyethylene terephthalate is formed from terephthalic acid or an ester thereof, and polyethylene naphthalate is formed from 2,7-naphthalene dicarboxylic acid or an ester thereof.

In accordance with this invention, it is contemplated that the specific thickness of first barrier portion 12 may be chosen to provide any of a range of WVTR values. Biaxially oriented and heatset PET films, when used as the primary vapor barrier, have a relatively high WVTR, compared with other films such as polyethylene. For example, a PET film having a thickness of 12 µm exhibits a WVTR of about 40 g/m²/day, compared with a value of about 10 g/m²/day for high density polyethylene of the same thickness, using ASTM method F1429 at 38°C, 90% relative humidity.

First barrier portion 12 has a Water Vapor Transmission Rate (WVTR) between about 5 and about 100 g/m²/day. Preferably, the WVTR is between about 10 and about 50 g/m²/day. Such a value is high enough that films of moderate WVTR can be obtained, while much lower values can be obtained by further modifications, as will be described below.

First barrier portion 12 may also comprise a particulate additive, for example to improve the visual appearance of the product or to modify the WVTR of the barrier assembly to water vapor or other gasses. One example of such material is a biaxially oriented polyethylene terephthalate containing approximately 15% of titanium dioxide, such as is commercially available from DuPont Teijin Films of Wilmington, DE under the name Melinex® 365. Other types and amounts of particulate additives such as for example clay, talc, and silica) may also be used according to the invention.

First barrier portion 12 may also include additives to reduce the flame spread of the barrier assembly. An example of a PET film with slow burning characteristics is Melinex® D317 produced by DuPont Teijin Films of Wilmington, DE. Incorporation of flame-retardant additives in first barrier portion 12 may reduce the need for such additives to be included elsewhere, for example in the laminating adhesives in common use for making facings. Such additives as are typically added to laminating adhesives, though effective in imparting flame retardancy, tend to be migratory in nature and corrosive to aluminum. This compromises the barrier properties of the facing. In contrast, flame-retardant additives typically used in PET films are not migratory, and thus typically do not cause this problem.

First thermal bonding layer 14 is capable of forming an adhesive bond to first barrier portion 12 and to fibrous reinforcing layer 16, to be described shortly. Typically first thermal bonding layer 14 is formed on a surface of first barrier portion 12 to form a film composite. The composite is subsequently attached to fibrous reinforcing layer 16 by applying pressure and by heating to a temperature high enough to soften layer 14 but not high enough to soften or melt the first barrier portion 12 or the fibrous reinforcing layer 16.

First thermal bonding layer 14 may comprise any of a number of materials meeting the above-mentioned requirements, and many such materials are known in the art, for example ethylene-vinyl acetate copolymers. In one preferred embodiment of the invention, first thermal bonding layer 14 may comprise a vinylidene chloride copolymer having from about 80 wt.% to about 92 wt.% vinylidene chloride content. Such copolymers typically are capable of thermal bonding at temperatures from about 105°C to about 120 °C, and are available for example under the name SARAN® versions 506, F271, F278, and F310 from Dow Chemical, Midland, Michigan. Use of such copolymers for first thermal bonding layer 14 may provide additional resistance to water vapor transmission. One useful exemplary copolymer comprises approximately 90 wt.% vinylidene chloride, 7 wt.% methacrylonitrile, 3 wt.% methyl methacrylate, and 1 wt.% itaconic acid. Such a bonding layer, in addition to providing adhesion, also decreases the WVTR of the multilayer barrier assembly.

In another preferred embodiment of the invention, first thermal bonding layer 14 may comprise a polyester resin, particularly a copolyester resin derived from one or more dibasic aromatic carboxylic acids, such as terephthalic acid, isophthalic acid and hexahydroterephthalic acid, and one or more glycols, such as ethylene glycol, diethylene glycol, triethylene glycol and neopentyl glycol. First thermal bonding layer 14 may comprise a terephthalate-containing polyester. A preferred copolyester is derived from terephthalic acid and one or both of isophthalic acid and hexahydroterephthalic acid, and one or more glycols, preferably ethylene glycol. Exemplary copolyesters that provide satisfactory bonding properties in the amorphous state are those of ethylene terephthalate and ethylene isophthalate, especially in the molar ratios 60 to 90 mol% ethylene terephthalate and correspondingly 40 to 10 mol% ethylene isophthalate. Particularly preferred copolyesters comprise 70 to 85 mol% ethylene terephthalate and 30 to 15 mol% ethylene isophthalate, for example a copolyester of approximately 80 mol% ethylene terephthalate and approximately 20 mol% ethylene isophthalate.

The vapor barrier properties of the multilayer barrier assemblies of this invention may also be enhanced by adding vermiculite and/or other inorganic fillers to first thermal bonding layer 14. Organic materials such as hydrophilic polymers can alternatively added to increase WVTR. Thus variations in first thermal bonding layer 14 may be used alternatively or in addition to variations in first barrier portion 12 as means for changing the WVTR of vapor barrier assembly 10.

In manufacturing multilayer barrier assemblies according to the invention, it may be advantageous to provide first barrier portion 12 and first thermal bonding layer 14 together in the form of a film composite. Such a composite may be formed by solvent casting or extrusion of the first thermal bonding layer onto the surface of a self-supporting film of the barrier portion material, which is preferably a biaxially oriented and heat-set film of polyethylene terephthalate or polyethylene naphthalate.

In the case where first barrier portion 12 is biaxially oriented polyethylene terephthalate and first thermal bonding layer 14 is a copolyester resin as described above, the film composite may be conveniently made by a process that includes multiple extrusion through a multiple orifice die or coextrusion of the composite layers, e.g. broadly as described in U.S. Pat. No. 3,871,947, followed by molecular orientation by stretching in one or more directions and heat setting. A convenient process and apparatus for coextrusion, known as single channel coextrusion, is described in U.S. Pat. No. 4,165,210 and GB patent specification No. 1,115,007. The method comprises simultaneously extruding streams of the first and second polyesters from two different extruders, uniting the two streams in a tube leading to a manifold of an extrusion die, and extruding the two polyesters together through the die under conditions of streamline flow so that the two polyesters occupy distinct regions of the flow without intermixing, whereby a film composite is produced.

Biaxial orientation of the polyethylene terephthalate barrier portion of the film composite may be accomplished by stretching the composite in sequence in two mutually perpendicular directions typically at temperatures in the range of about 78 to 125°C. Generally, the conditions applied for stretching the composite may function to partially crystallize the first thermal bonding layer, and in such cases it is preferred to heat set the film composite under dimensional restraint at a temperature greater than the crystalline melting temperature of the first thermal bonding layer, but lower than the crystalline melting temperature of the polyethylene terephthalate barrier portion. The composite is then permitted or caused to cool, rendering the first thermal bonding layer essentially amorphous while high crystallinity is maintained in the barrier portion. Therefore, the stretching operation is preferably followed by heat setting under dimensional restraint, typically at a temperature in the range 150 to 250°C. Convenient processes for stretching and heat setting are described in U.S. Pat. No. 3,107,139. Thus in one embodiment of the invention, the vapor barrier assembly 10 comprises a film formed by coextrusion so that it comprises two layers made of different materials, but forming one sheet of film.

The polyethylene terephthalate barrier side of such a film composite can optionally be coated via an in-line gravure coater with a primer material that improves its adhesion to water-based and solvent-based coatings and adhesives, thus providing a surface that is more easily printed on, for example. Printing primers are typically based on aqueous polymer dispersions, emulsions or solutions of acrylic, urethane, polyester or other resins well known in the art. An example of one such coating, containing at least one sulfopolyester, at least one tetrablock copolymer resin, and at least one acrylamide/acrylic acid copolymer or salts thereof, is disclosed in U.S. Pat. No. 5,985,437 to Chappell et al.

Coextruded film composites of the sort described here, incorporating a barrier portion 12 and a bonding layer 14, are commercially available from DuPont Teijin Films of Wilmington, DE under the name Melinex® 301 H. Adhesive-coated polyester films 12 employing an ethylene vinyl acetate bonding layer 14 are available under the name Mylar® RL42, also available from DuPont Teijin Films.

Fibrous reinforcing layer 16 comprises a material capable of bonding with first thermal bonding layer 14 under heating and pressing conditions to be described below, and capable of providing tear resistance to the vapor barrier assembly 10 and thermal insulation products made from it. The material must be tough and flexible enough that it can easily bend without breaking.

For example, the tear resistance of a metalized PET film sold under the name of Melinex® 301 H showed significantly increased Elmendorf tear values according to ASTM D1922 (in gram.cm/cm tear/thou) after bonding to a spunbonded nonwoven polyester product (Starweb™ 2253C, described below), as follows in TABLE 1:

**TABLE 1**

| | Melinex® Alone | Melinex® + Starweb™ 2253C |
|---|---|---|
| Machine Direction | 146 | 2662 |
| Transverse Direction | 174 | 3520 |

Although not required, it is preferred that fibrous reinforcing layer 16 have sufficient porosity that it does not significantly affect the WVTR of the vapor barrier assembly or a thermal insulation product made from it.

Suitable nonlimiting examples of materials for making fibrous reinforcing layer 16 are woven or nonwoven fibrous materials comprising polyester, glass, polypropylene, polyethylene, and mixtures of any of these. Many such materials are known in the art, and are referred to generically as "scrim". One suitable nonwoven scrim, a spunbonded polyester product, is available from BBA Filtration (division of BBA Nonwovens, Nashville, TN) under the name StarWeb® 2253C, and has a basis weight of about 18 g/m² and a thickness of 0.0038 inches. Another suitable nonwoven scrim, also available from BBA Filtration, is Reemay® 2004 spunbonded polyester, which has a basis weight of about 14 g/m². Nonwoven scrims suitable for use in this invention have a basis weight typically in the range of about 5 to about 30 g/m², preferably from about 10 to about 20 g/m².

Woven scrims (bi or tri-dimensional) may also be used, especially when a high level of tensile and/or tear strength is desired, and these may vary in basis weight from about 15 to about 300 g/m². They may be made from any of a variety of materials, including but not limited to glass fiber, polyethylene terephthalate, polyethylene naphthalate, NYLON® polyamide, carbon fiber, natural fiber (cotton, flax, jute, etc.), and polypropylene. One suitable example is Fiberglass Cloth, available from Bondo Corp. of Atlanta, GA. Another is poly(p-phenylene-2,6-benzobisoxazole), sold under the name PBO® by Toyobo Co. Ltd., Osaka, Japan. Also suitable are KEVLAR® aramid fiber, available from DuPont, Wilmington, DE and TECHNORA® para-aramid fiber by Teijin Ltd., Japan, as well as polyethylene-based products sold under the names SPECTRA®, available from Honeywell of Morristown, NJ; CERTRAN®, available from Hoechst Celanese of Charlotte, NC; and DYNEEMA®, available from Toyobo Co. Ltd.

Typically, vapor barrier assembly 110 is constructed by first forming a film composite comprising first barrier layer 18 and first thermal bonding layer 14, followed by applying a second barrier layer 20 and finally bonding the thus-formed three-layer composite to fibrous reinforcing layer 16.

The bonding step may be achieved by applying heat and pressure to cause first thermal bonding layer 14 to soften and adhere to fibrous reinforcing layer 16.

Figure 2 shows a cross section view of an apparatus for performing the bonding step is illustrated with reference to Figure 2. A sheet of material used for the fibrous reinforcing layer 16, such as scrim, is fed from a supply roll 40. In addition, a first film composite comprising a thermal bonding layer 14 and a barrier portion 12 is fed from a supply roll 42 and is disposed such that thermal bonding layer 14 is facing fibrous reinforcing layer 16. Although not shown, a second film composite may be applied to the other side of fibrous reinforcing layer 16. Such a second film composite may or may not be of identical construction to the first film composite. The film composite and the fibrous reinforcing layer 16 are drawn between a pair of heated calender rolls 44 and 46. The heated calender rolls cause the surfaces of the fibrous reinforcing layer and the film composite to adhere to each other. The calender rolls are heated to a temperature that activates the thermal bonding layer 14 but which does not melt the entire film composite. For example, this temperature is in the range of 200 °F to 500°F (93 °C to 260°C) with the preferred temperature range being 260 °F to 330 °F (127°C - 165°C) for an embodiment of the invention in which the film composite is Melinex® 301H (20 µm), and fibrous reinforcing layer 16 is a polyester nonwoven material (Starweb™ 2253C). However, higher temperatures in the range of 450°-500°F (232 °C- 260°C) can be used at high line speeds, i.e., speeds of 300 to 400 feet (91 to 122 meters) per minute. The calender rolls are displaced from one another at a distance appropriate to create a nip pressure suitable for lamination. A vapor barrier assembly is formed which is pulled through the process equipment by means of a take-up roll 48.

Bonding of the barrier portion to the fibrous reinforcing layer may advantageously be performed in conjunction with a scrim manufacturing process, since many such manufacturing facilities have calendering rolls integrated into the process. Such an in-line bonding process results in a simplified and more cost effective operation. Whether or not the bonding is done in-line in conjunction with a scrim manufacturing process, the operation can generally be done at higher speeds, with less energy consumption, and with simpler process equipment (lower capital and labor cost) than would be required if an adhesive (typically aqueous) needed to be applied for bonding the film to the fibrous reinforcing layer 16.

The use of film composites may be advantageous in that they are commercially available in widths as wide as 130 inches. Since many nonwoven scrim manufacturing lines are over 100 inches wide as well, thermal bonding of the film composite to the scrim can be performed in-line, further improving economics. Further, the greater width of such composite films confers an advantage over systems requiring the use of commercial adhesive coating lines (to apply water-based adhesives), since such lines are generally less than 80 inches wide, more typically 40-60 inches wide, and therefore in many cases narrower than either the scrim or the film that is to be adhered to it.

Vapor barrier assemblies may additionally be embossed on the surface facing away from the fibrous reinforcing layer in such patterns as may be desired for decoration. Specifically, pressure and heat may be used to make certain areas of the face material thinner, so that the surface appears raised from the areas which were made thinner. Doing so in a pattern may be used to ornament the facing.

Figure 3 shows another exemplary embodiment of a vapor barrier assembly, indicated generally at 110, according to the invention in which first barrier portion 12 is a two-layer structure consisting of a first barrier layer 18 and a second barrier layer 20. One of the barrier layers is a polyester film such as described above in relation to barrier portion 12 in Figure 1, and the other is a material capable of reducing WVTR. By providing a layer made from such a material, it is possible to decrease the WVTR of a vapor barrier assembly, independent of any changes made to the first barrier layer 18, in accordance with the invention. Although Figure 3 shows second barrier layer 20 on only one side of first barrier layer 18, there may be yet another layer capable of reducing WVTR on the other side as well.

Materials suitable for preparing second barrier layer 20 include, but are not limited to, a metal such as aluminum, polyvinyl chloride, and copolymers of vinylidene chloride. One useful exemplary copolymer comprises approximately 90 wt.% vinylidene chloride, 7 wt.% methacrylonitrile, 3 wt.% methyl methacrylate, and 1 wt.% itaconic acid. Other useful materials include polyvinyl alcohol, ethylene-vinyl alcohol copolymers, polyacrylonitrile, and polychlorotrifluoroethylene.

In the case where second barrier layer 20 is a metal, it may have a thickness ranging from about 10 to about 5,000 angstroms, most preferably from about 80 to about 300 angstroms, or alternatively have an optical density of from about 1.5 to 3.5 as measured with a Tobias TBX Densitometer, offered by Tobias Associates, Inc. of Glenside, Pennsylvania, USA. The layer may comprise any metal. Nonlimiting examples of useful metals include, in addition to aluminum, palladium, zinc, nickel, gold, silver, copper, indium, tin, chromium, titanium, zinc/aluminum alloy, copper/aluminum alloy or copper/zinc/aluminum alloy. Typically, aluminum will be used. At an aluminum thickness of 200 angstroms for second barrier layer 20, superposed on a biaxially oriented PET film of thickness 23 µm, a WVTR as low as approximately 0.7 g/m²/day may be obtained, as compared with 20 g/m²/day for the PET film alone. WVTR may be adjusted by forming second barrier layer 20 from various thicknesses of aluminum. Thus for example varying aluminum thickness in the range of 50 to 500 angstroms causes WVTR to vary from about 0.2 to about 1.5 g/m²/day.

An aluminum second barrier layer 20 may conveniently be manufactured by applying it by vacuum deposition, using methods and equipment known in the art. For example, a vacuum deposition apparatus available from Galileo Vacuum Systems of Prato, Italy may be used.

Other methods such as electroplating and sputtering may be used, and are well known in the art. The film, either before or after metal deposition, may optionally be subjected to a surface modification treatment, such as for example corona discharge, or a coating treatment with a resin which may further improve the metal adhesion or other characteristics as desired.

Second barrier layer 20 may also comprise a copolymer of vinylidene chloride, which may be formed on top of the first barrier layer 18 for example by coating as an aqueous dispersion or extruding as a polymer web onto layer 18, by means known in the art. Second barrier layer 20 may also itself comprise two or more layers.

One exemplary embodiment (not shown) comprises both an aluminum layer and a vinylidene chloride copolymer layer. In such an embodiment of the invention, it may be advantageous for the vinylidene chloride copolymer to be situated so as to protect the aluminum layer from the environment, for protection of the aluminum from corrosion or oxidation. The copolymer layer may also act as a print primer so that the metalized film can be printed with graphics if desired, or as a primer for additional adhesives that might be applied to the film.

Note that, although the discussion here refers to the case where first barrier layer 18 may be a polyester and second barrier layer 20 may be a metal or a polyvinylidene chloride copolymer or other polymer, the order may be reversed. Such a construction may confer an advantage, for example in situations where second barrier layer 20 may be subjected to environmental insults such as abrasion or exposure to a corrosive environment. By reversing the orientation, the metal layer 18 is protected by the polyester second barrier layer 20.

Figure 4 shows, according to the invention, yet another exemplary vapor barrier assembly, indicated generally at 210, in which a second barrier portion 24 is bonded to the fibrous reinforcing layer 16 by means of a second thermal bonding layer 22. Second barrier portion 24 may be prepared according to the description provided above for first barrier portion 12, described in relation to Figure 1, although it may or may not be identical in composition or dimensions. Similarly, second thermal bonding layer 22 may be described according to the foregoing description of possible embodiments of first thermal bonding layer 14, and may or may not be of identical composition or dimensions. By providing two barrier layers, a decrease in WVTR may be achieved. The use of two relatively thin barrier layer rather than a single thick one may provide processing advantages, since coating equipment can sometimes apply and cure coatings only within a narrow range. In addition, there are limits on vacuum deposited metal thickness attainable by commercially available equipment.

Figure 5 shows a further exemplary vapor barrier assembly according to the invention, indicated generally at 310, in which first barrier portion 12 comprises first and second barrier layers 18 and 20, respectively, and second barrier portion 24 comprises third and fourth barrier layers 26 and 28, respectively. Third and fourth barrier layers 26 and 28 may be described according to the description already provided for first and second barrier layers 18 and 20 respectively, described in relation to Figure 3, but need not be identical to them in composition or dimensions.

From the foregoing description of exemplary embodiments of the invention, it can be appreciated that a variety of configurations of multilayer barrier assemblies suitable for use as vapor barriers may be made according to the invention, and a wide range of WVTR values may be attained thereby. Following in TABLE 2 are nonlimiting examples of several configurations of vapor barriers, and the approximate values of WVTR that may be achieved with them.

**TABLE 2**

| BARRIER TYPE | WVTR (g/m²/day) |
|---|---|
| 12 µm PET | 40 |
| 23 µm PET | 20 |
| 23 µm PET + PVdC (1 side) | 10 |
| 23 µm PET + PVdC (2 sides) | 7 |
| 23 µm PET, Al metalized | 0.8 |
| 23 µm PET, Al metalized + PVdC (2 sides) | 0.6 |
| 12 µm PET, Al metalized + PVdC (2 sides)** | 0.06 |

| | |
|---|---|
| ** Two such assemblies, laminated together with adhesive | |

As used in the foregoing table, PVdC is a copolymer of approximately 90 wt.% vinylidene chloride, 7 wt.% methacrylonitrile, 3 wt.% methyl methacrylate, and 1 wt.% itaconic acid.

It should be noted that metal and PVdC may be on either one or both sides of a polyester barrier layer according to the invention, and thermal bonding layers may be on the surface of either a metal or PVdC layer as well as on a polyester layer.

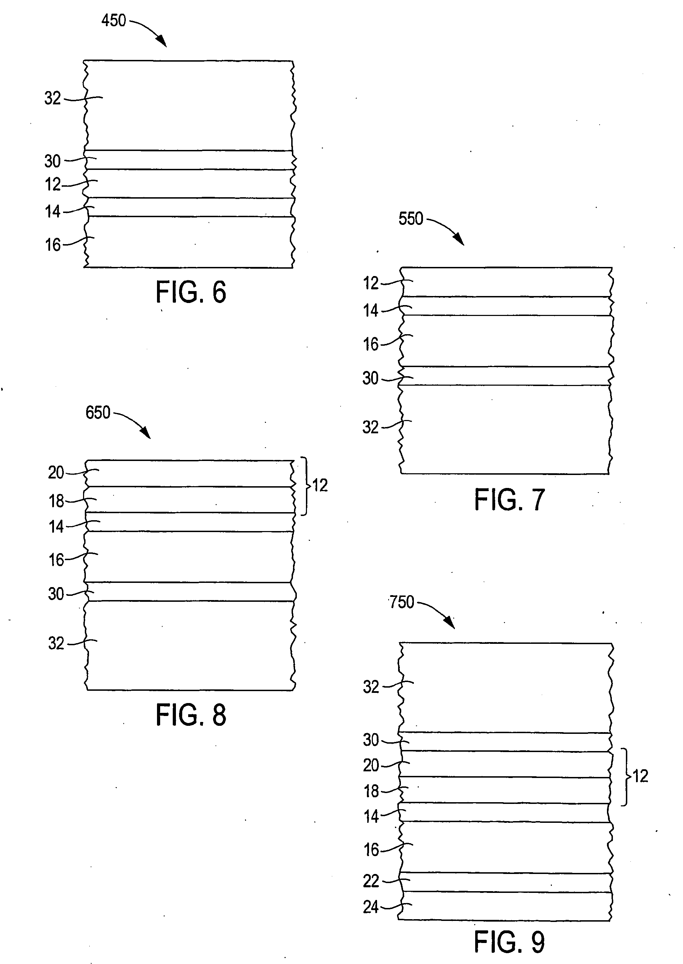

Referring to Figure 6, there is shown an exemplary multilayer barrier assembly suitable for use as a thermal insulation product according to another aspect of the invention, indicated generally at 450. Thermal insulation product 450 comprises a first barrier portion 12, a first thermal bonding layer 14 on one surface of barrier portion 12, and a fibrous reinforcing layer 16 bonded to first thermal bonding layer 14. All three layers are substantially coextensive, and constitute a vapor barrier assembly similar to that described in relation to Figure 1. Adhered to first barrier portion 12 by means of adhesive layer 30 is fibrous thermal insulation layer 32.

Fibrous thermal insulation layer 32 may be fibrous glass having a density within the range of from about 0.3 to about 1.0 pounds per cubic foot, although other densities can be used. Sufficient thickness of the material is typically used such that a basis weight greater than about 60 g/m² is obtained. The material may typically be in the form of a batt, meaning that it forms a self-supporting structure that does not fall apart when suspended from one end. If fibrous thermal insulation layer 32 is made of fibrous glass, preferably the layer 32 has a density of between about 0.3 and about 0.6 pounds per cubic foot. Also, other fibers, such as mineral fibers of rock, slag, or basalt can be used. Polymeric fibers such as for example polypropylene, polyester and polysulfide may also be used. For any of these materials of construction, the fibers may be bonded together with a binder material, such as a urea phenol-formaldehyde commonly used with fiberglass insulation, or the fibrous thermal insulation layer 32 may be binderless. An example of an encapsulated binderless product suitable for making fibrous thermal insulation layer 32 is disclosed in U.S. Pat. No. 5,277,955 to Schelhorn et al. Other fibrous materials in batt form for use in thermal insulation products are known in the art, and the use of any of these is contemplated by this invention.

Adhesive layer 30 may be any adhesive suitable for attaching batt to facings; many such adhesives and their methods of application are known in the art. Suitable adhesives may include for example hot-melt adhesives, phenol-formaldehyde adhesives, polyurethane adhesives, and others. A water-based laminating adhesive may also be used. One such water based laminating adhesive ("polyvinyl emulsion") is sold under the name BONDMASTER® 40-0857 by National Adhesives, a division of National Starch and Chemical Co., Bridgewater, NJ.

To adhere the vapor barrier assembly to the fibrous insulation layer, the vapor barrier assembly is typically first unwound from a roll and coated with an adhesive. The coater can be of the direct roll coating, Mayer-bar, kiss, or bead applicator design. Alternatively, the adhesive can be sprayed onto the facing. Suitable adhesives are typically water based, but they may be organic solvent based. If water based, the water content is typically about 50% by weight, and a typical wet application rate is 3 grams per square foot. Kiss coaters and bead applicators are typically used as they provide good control of adhesive application rates.

The insulation batt is also unwound from a roll and laminated to the coated vapor barrier assembly by passing them together through a nip roll that applies even pressure across the width of the insulation. Additional heating may optionally be provided to evaporate the water or solvent from the adhesive. The laminated insulation is wound into a roll under controlled conditions to minimize excessive compression of the insulation, which would negatively impact the thermal insulation value of the material.

In an alternative embodiment of the invention, adhesive layer 30 may comprise one of the materials discussed above for the preparation of first thermal bonding layer 14, such as for example an EVA adhesive. The adhesive may be applied to the fibrous reinforcing layer of the vapor barrier assembly, followed by drying and curing to form a heat-bondable surface. Such a vapor barrier assembly may then be set aside form storage or transportation if desired, and later be thermally laminated to the insulation batt. This eliminates the sometimes problematic issue of removing water during the process of laminating the vapor barrier to the batt. This embodiment of the invention carries advantages of convenience and improved manufacturing logistics, as it does not require (but still allows) the batt-to-vapor barrier lamination to be performed at the same facility as, and soon after, the application of adhesive layer 30 to the vapor barrier assembly.

Figure 7 shows an additional exemplary embodiment of a thermal insulation product according to the invention, indicated generally at 550, in which fibrous thermal insulation layer 32 is adhered by means of adhesive 30 to fibrous reinforcing layer 16. The materials and construction techniques for thermal insulation product 550 may be any of those described in relation to thermal insulation product 450 in Figure 6.

Figure 8 shows a still further exemplary embodiment of a thermal insulation product according to the invention, indicated generally at 650, in which a fibrous thermal insulation layer 32 is adhered by means of adhesive 30 to fibrous reinforcing layer 16. Fibrous reinforcing layer 16 is part of a vapor barrier assembly, such as was described at 110 in relation to Figure 3, having first and second barrier layers 18 and 20, respectively. Although Figure 8 shows thermal insulation layer 32 adhered to reinforcing layer 16, it may instead be adhered to second barrier layer 20.

Figure 9 shows a yet further exemplary embodiment of a thermal insulation product according to the invention, indicated generally at 750, in which fibrous thermal insulation layer 32 is adhered by means of adhesive 30 to second barrier layer 20 of a vapor barrier assembly such as that indicated above at 210 in relation to Figure 4.

### EXAMPLES

### Example 1: Bonding of Film Composite to Fibrous Reinforcing Layer

The fibrous reinforcing layer was Starweb™ 2253C polyester nonwoven scrim from BBA Nonwovens. The film composite was Melinex® 301H, a coextruded heat bondable polyester film composite comprising a thermal bonding layer made from a copolyester of ethylene terephthalate on a 20 µm PET layer. The PET layer was aluminum metalized to a 2.0 Optical Density to provide a WVTR of 0.8 grams/m²/day.

Both materials were unwound from master rolls and passed through a Model TT Laboratory Coater/Laminator manufactured by Faustel Corp. Germantown, WI. The machine was equipped with a 2-roll laminating or calendering nip. The heated roll was an 6-inch outside diameter, oil-heated chrome roller that was set to a temperature of 325 °F sufficient to soften the bondable layer but not the barrier layer. An un-heated rubber covered nip roll, 2.5 inches outside diameter, provided even nip pressure at a setting of 60 psi. The materials were oriented so that the metalized barrier side of the Melinex® 301H was against the heated roll surface and the polyester nonwoven was against the rubber nip roll.

The fibrous reinforcing layer and film composite were thermally laminated at a line speed of 3 feet per minute to form the vapor barrier assembly. After lamination, though not essential, the vapor barrier assembly was passed through two chrome cooling rollers with cooling fluid (tap water) passing through the rolls. The resulting vapor barrier assembly layers could not be peeled apart by hand. The Elmendorf Tear strength of the resulting vapor barrier assembly was measured according to ASTM method D1922 and found to have the values recited above in TABLE 1.

Having described the invention, we now claim the following and their equivalents.

## Claims

1. A multilayer barrier assembly comprising a first barrier portion that comprises a first biaxially oriented polyethylene terephthalate layer, a first thermal bonding layer adjacent and substantially coextensive with said first barrier portion, and a fibrous reinforcing layer adjacent and substantially coextensive with said first thermal bonding layer, said fibrous reinforcing layer having a basis weight from about 5 g/m² to about 30 g/m²; wherein
said first thermal bonding layer comprises a first bonding material having a glass transition temperature that is lower than a glass transition temperature of the first biaxially oriented polyethylene terephthalate layer.

2. The multilayer barrier assembly of claim 1 wherein said first barrier portion further comprises a second layer lying adjacent and substantially coextensive with said first biaxially oriented polyethylene terephthalate layer.

3. The multilayer barrier assembly of either of claims 1 and 2 wherein said first thermal bonding layer lies adjacent and substantially coextensive with said first biaxially oriented polyethylene terephthalate layer.

4. The multilayer barrier assembly of any of claims 1 to 3 wherein said first bonding material comprises an amorphous copolyester of about 60 to about 90 mol% ethylene terephthalate and correspondingly about 40 to about 10 mol% ethylene isophthalate.

5. The multilayer barrier assembly of any of claims 1 to 3 wherein said first bonding material comprises a vinylidene chloride copolymer having from about 80 wt.% to about 92 wt.% vinylidene chloride content.

6. The multilayer barrier assembly of claim 2 wherein said second layer comprises one or both of aluminum and a vinylidene chloride copolymer.

7. The multilayer barrier assembly of either of claims 1 and 2 further comprising a second thermal bonding layer adjacent and substantially coextensive with said fibrous reinforcing layer, and a second barrier portion comprising a second biaxially oriented polyethylene terephthalate layer, said second barrier portion adjacent and substantially coextensive with said second thermal bonding layer.

8. The multilayer barrier assembly of claim 7 wherein said second barrier portion further comprises a third layer lying adjacent and substantially coextensive with said second biaxially oriented polyethylene terephthalate layer.

9. The multilayer barrier assembly of claim 8 wherein said third layer comprises one or both of aluminum and a vinylidene chloride copolymer.

10. The multilayer barrier assembly of any of claims 1 to 9 wherein said fibrous reinforcing layer comprises a woven or nonwoven material comprising one or more of polyester fibers, glass fibers, polypropylene fibers and polyethylene fibers.

11. The multilayer barrier assembly of any of claims 1 to 10 further comprising:
an adhesive layer adjacent and substantially coextensive with one of said first barrier portion and said fibrous reinforcing layer; and
a fibrous thermal insulation layer adjacent and substantially coextensive with said adhesive layer.

12. The multilayer barrier assembly of claim 11 wherein said adhesive layer comprises a second bonding material having a glass transition temperature that is lower than a glass transition temperature of the first biaxially oriented polyethylene terephthalate layer.

13. The multilayer barrier assembly of either of claims 11 and 12 wherein said first barrier portion further comprises a second layer comprising one or both of aluminum and a vinylidene chloride copolymer, said second layer lying adjacent and substantially coextensive with said first biaxially oriented polyethylene terephthalate layer.

14. A method for making a multilayer barrier assembly comprising the steps of:
forming a film composite comprising a first barrier portion that comprises a first biaxially oriented polyethylene terephthalate layer, and a first thermal bonding layer adjacent and substantially coextensive with said first barrier portion, said first thermal bonding layer comprising a first bonding material having a glass transition temperature that is lower than a glass transition temperature of the first biaxially oriented polyethylene terephthalate layer;
positioning a fibrous reinforcing layer over said first thermal bonding layer, said fibrous reinforcing layer having a basis weight from about 5 g/m² to about 30 g/m²; and
applying heat and pressure to bond together said film composite and said fibrous reinforcing layer to form a vapor barrier assembly.

15. The method of claim 14 further comprising forming a second layer adjacent and substantially coextensive with said first biaxially oriented polyethylene terephthalate layer to form at least a part of said first barrier portion.

16. The method of either of claims 14 and 15 wherein said step of forming a film composite comprises forming said first thermal bonding layer adjacent and substantially coextensive with said first biaxially oriented polyethylene terephthalate layer.

17. The method of any of claims 14 to 16 further comprising selecting for said first bonding material a composition comprising an amorphous copolyester of about 60 to about 90 mol% ethylene terephthalate and correspondingly about 40 to about 10 mol% ethylene isophthalate.

18. The method of any of claims 14 to 16 further comprising selecting for said first bonding material a composition comprising a vinylidene chloride copolymer having from about 80 wt.% to about 92 wt.% vinylidene chloride content.

19. The method of any of claims 15 to 18 wherein said step of forming a second layer comprises forming said second layer from one or both of aluminum and a vinylidene chloride copolymer.

20. The method of any of claims 14 to 19 further comprising placing a second thermal bonding layer on said fibrous reinforcing layer adjacent and coextensive with said fibrous reinforcing layer, and forming a second barrier portion adjacent and substantially coextensive with said second thermal bonding layer, the second barrier portion comprising a second biaxially oriented polyethylene terephthalate layer.

21. The method of claim 20 further comprising forming a third layer adjacent and substantially coextensive with said second biaxially oriented polyethylene terephthalate layer to form at least a part of said second barrier portion.

22. The method of claim 21 wherein said step of forming a third layer comprises forming said third layer from one or both of aluminum and a vinylidene chloride copolymer.

23. The method of any of claims 14 to 22 wherein said step of positioning a fibrous reinforcing layer over said first thermal bonding layer comprises using in said step a fibrous reinforcing layer comprises a woven or nonwoven material comprising one or more of polyester fibers, glass fibers, polypropylene fibers and polyethylene fibers.

24. The method of any of claims 14 to 23 further comprising the steps of:
positioning an adhesive on a surface of said vapor barrier assembly;
positioning a thermal insulation batt adjacent and substantially coextensive with said adhesive on said surface of said vapor barrier assembly; and
applying pressure to effect adhesion between said batt and said vapor barrier assembly.

25. The method of claim 24 further comprising selecting for said adhesive a second bonding material having a glass transition temperature that is lower than a glass transition temperature of the first biaxially oriented polyethylene terephthalate layer.

## Patentansprüche

1. Mehrschichtsperranordnung, umfassend einen ersten Sperrabschnitt, der eine erste biaxial orientierte Polyethylenterephthalatschicht aufweist, eine erste Thermobindeschicht, die zum ersten Sperrabschnitt benachbart und im Wesentlichen flächengleich ist, und eine Faserverstärkungsschicht, die zur ersten Thermobindeschicht benachbart und im Wesentlichen flächengleich ist, wobei die Faserverstärkungsschicht ein Flächengewicht von etwa 5 g/m² bis etwa 30 g/m² aufweist; wobei
die erste Thermobindeschicht ein erstes Bindematerial aufweist, das eine Glasübergangstemperatur aufweist, die niedriger als eine Glasübergangstemperatur der ersten biaxial orientierten Polyethylenterephthalatschicht ist.

2. Mehrschichtsperranordnung nach Anspruch 1, wobei der erste Sperrabschnitt ferner eine zweite Schicht aufweist, die benachbart zur ersten biaxial orientierten Polyethylenterephthalatschicht verläuft und im Wesentlichen flächengleich zu ihr ist.

3. Mehrschichtsperranordnung nach einem der Ansprüche 1 oder 2, wobei die erste Thermobindeschicht benachbart zur ersten biaxial orientierten Polyethylenterephthalatschicht verläuft und im Wesentlichen flächengleich zu ihr ist.

4. Mehrschichtsperranordnung nach einem der Ansprüche 1 bis 3, wobei das erste Bindematerial amorphes Copolyester aus etwa 60 bis etwa 90 Mol-% Ethylenterephthalat und entsprechend etwa 40 bis etwa 10 Mol-% Ethylenisophthalat aufweist.

5. Mehrschichtsperranordnung nach einem der Ansprüche 1 bis 3, wobei das erste Bindematerial ein Vinylidenchloridcopolymer mit einem Vinylidenchloridgehalt von etwa 80 Gew.-% bis etwa 92 Gew.-% aufweist.

6. Mehrschichtsperranordnung nach Anspruch 2, wobei die zweite Schicht Aluminium und/oder ein Vinylidenchloridcopolymer aufweist.

7. Mehrschichtsperranordnung nach einem der Ansprüche 1 oder 2, die ferner eine zweite Thermobindeschicht, die zur Faserverstärkungsschicht benachbart und im Wesentlichen flächengleich ist, und einen zweiten Sperrabschnitt aufweist, der eine zweite biaxial orientierte Polyethylenterephthalatschicht aufweist, wobei der zweite Sperrabschnitt zur zweiten Thermobindeschicht benachbart und im Wesentlichen flächengleich ist.

8. Mehrschichtsperranordnung nach Anspruch 7, wobei der zweite Sperrabschnitt ferner eine dritte Schicht aufweist, die zur zweiten biaxial orientierten Polyethylenterephthalatschicht benachbart verläuft und im Wesentlichen flächengleich zu ihr ist.

9. Mehrschichtsperranordnung nach Anspruch 8, wobei die dritte Schicht Aluminium und/oder ein Vinylidenchloridcopolymer aufweist.

10. Mehrschichtsperranordnung nach einem der Ansprüche 1 bis 9, wobei die Faserverstärkungsschicht ein gewebtes oder ungewebtes Material aufweist, das einen oder mehrere Bestandteile der Gruppe aufweist, die aus Polyesterfasern, Glasfasern, Polypropylenfasern und Polyethylenfasern besteht.

11. Mehrschichtsperranordnung nach einem der Ansprüche 1 bis 10, die ferner aufweist:
eine Klebemittelschicht, die zum ersten Sperrabschnitt oder zur Faserverstärkungsschicht benachbart und im Wesentlichen flächengleich ist; und
eine Faserwärmedämmungsschicht, die zur Klebemittelschicht benachbart und im Wesentlichen flächengleich ist.

12. Mehrschichtsperranordnung nach Anspruch 11, wobei die Klebemittelschicht ein zweites Bindematerial aufweist, das eine Glasübergangstemperatur aufweist, die niedriger als eine Glasübergangstemperatur der ersten biaxial orientierten Polyethylenterephthalatschicht ist.

13. Mehrschichtsperranordnung nach einem der Ansprüche 11 oder 12, wobei der erste Sperrabschnitt ferner eine zweite Schicht aufweist, die Aluminium und/oder ein Vinylidenchloridcopolymer aufweist, wobei die zweite Schicht zur ersten biaxial orientierten Polyethylenterephthalatschicht benachbart verläuft und im Wesentlichen flächengleich zu ihr ist.

14. Verfahren zur Herstellung einer Mehrschichtsperranordnung, das die Schritte aufweist:
Bilden eines Folienverbundstoffes, der einen ersten Sperrabschnitt, der eine erste biaxial orientierte Polyethylenterephthalatschicht aufweist, und eine erste Thermobindeschicht aufweist, die zum ersten Sperrabschnitt benachbart und im Wesentlichen flächengleich ist, wobei die erste Thermobindeschicht ein erstes Bindematerial mit einer Glasübergangstemperatur aufweist, die niedriger als eine Glasübergangstemperatur der ersten biaxial orientierten Polyethylenterephthalatschicht ist;
Anordnen einer Faserverstärkungsschicht über der ersten Thermobindeschicht, wobei die Faserverstärkungsschicht ein Flächengewicht von etwa 5 g/m² bis etwa 30 g/m² aufweist; und
Anwenden von Wärme und Druck, um den Folienverbundstoff und die Faserverstärkungsschicht zur Bildung einer Dampfsperranordnung miteinander zu verbinden.

15. Verfahren nach Anspruch 14, das ferner das Bilden einer zweiten Schicht aufweist, die zur ersten biaxial orientierten Polyethylenterephthalatschicht benachbart und im Wesentlichen flächengleich ist, um mindestens einen Teil des ersten Sperrabschnitts zu bilden.

16. Verfahren nach einem der Ansprüche 14 oder 15, wobei der Schritt des Bildens eines Folienverbundstoffes das Bilden der ersten Thermobindeschicht aufweist, die zur ersten biaxial orientierten Polyethylenterephthalatschicht benachbart und im Wesentlichen flächengleich ist.

17. Verfahren nach einem der Ansprüche 14 bis 16, das ferner das Auswählen einer Zusammensetzung für das erste Bindematerial aufweist, die amorphes Copolyester aus etwa 60 bis etwa 90 Mol-% Ethylenterephthalat und entsprechend etwa 40 bis etwa 10 Mol-% Ethylenisophthalat aufweist.

18. Verfahren nach einem der Ansprüche 14 bis 16, das ferner das Auswählen einer Zusammensetzung für das erste Bindematerial aufweist, die ein Vinylidenchloridcopolymer mit einem Vinylidenchloridgehalt von etwa 80 Gew.-% bis etwa 92 Gew.-% aufweist.

19. Verfahren nach einem der Ansprüche 15 bis 18, wobei der Schritt des Bildens einer zweiten Schicht das Bilden der zweiten Schicht aus Aluminium und/oder ein Vinylidenchloridcopolymer aufweist.

20. Verfahren nach einem der Ansprüche 14 bis 19, das ferner das Anordnen einer zweiten Thermobindeschicht auf der Faserverstärkungsschicht, die zur Faserverstärkungsschicht benachbart und flächengleich ist, und das Bilden eines zweiten Sperrabschnitts aufweist, der zur zweiten Thermobindeschicht benachbart und im Wesentlichen flächengleich ist, wobei der zweite Sperrabschnitt eine zweite biaxial orientierte Polyethylenterephthalatschicht aufweist.

21. Verfahren nach Anspruch 20, das ferner das Bilden einer dritten Schicht aufweist, die zur zweiten biaxial orientierten Polyethylenterephthalatschicht benachbart und im Wesentlichen flächengleich ist, um mindestens einen Teil des zweiten Sperrabschnitts zu bilden.

22. Verfahren nach Anspruch 21, wobei der Schritt des Bildens einer dritten Schicht das Bilden der dritten Schicht aus Aluminium und/oder ein Vinylidenchloridcopolymer aufweist.

23. Verfahren nach einem der Ansprüche 14 bis 22, wobei der Schritt des Anordnens einer Faserverstärkungsschicht über der ersten Thermobindeschicht das Verwenden einer Faserverstärkungsschicht in diesem Schritt aufweist, die ein gewebtes oder ungewebtes Material aufweist, das einen oder mehrere Bestandteile der Gruppe aufweist, die aus Polyesterfasern, Glasfasern, Polypropylenfasern und Polyethylenfasern besteht.

24. Verfahren nach einem der Ansprüche 14 bis 23, das ferner die Schritte aufweist:
Anordnen einer Klebemittels auf einer Oberfläche der Dampfsperranordnung;
Anordnen eine Wärmedämmstoffplatte, die zum Klebemittel auf der Oberfläche der Dampfsperranordnung benachbart und im Wesentlichen flächengleich ist; und
Anwenden von Druck, um eine Adhäsion zwischen der Stoffplatte und der Dampfsperranordnung zu bewirken.

25. Verfahren nach Anspruch 24, das ferner das Auswählen eines zweiten Bindematerials für das Klebemittel mit einer Glasübergangstemperatur aufweist, die niedriger als eine Glasübergangstemperatur der ersten biaxial orientierten Polyethylenterephthalatschicht ist.

## Revendications

1. Ensemble barrière multicouche comprenant une première partie de barrière qui comprend une première couche de téréphtalate de polyéthylène bi-orienté, une première couche de liage thermique adjacente et sensiblement coextensive avec ladite première partie de barrière, et une couche de renforcement fibreuse adjacente et sensiblement coextensive avec ladite première couche de liage thermique, ladite couche de renforcement fibreuse ayant une masse surfacique d'environ 5 g/m² à environ 30 g/m²,
dans lequel ladite première couche de liage thermique comprend un premier matériau liant ayant une température de transition vitreuse qui est inférieure à la température de transition vitreuse de la première couche de téréphtalate de polyéthylène bi-orienté.

2. Ensemble barrière multicouche selon la revendication 1 dans lequel ladite première partie de barrière comprend en outre une deuxième couche adjacente et sensiblement coextensive avec ladite première couche de téréphtalate de polyéthylène bi-orienté.

3. Ensemble barrière multicouche selon l'une ou l'autre des revendications 1 et 2 dans lequel ladite première couche de liage thermique est adjacente et sensiblement coextensive avec ladite première couche de téréphtalate de polyéthylène bi-orienté.

4. Ensemble barrière multicouche selon l'une quelconque des revendications 1 à 3 dans lequel ledit premier matériau liant comprend un copolyester amorphe d'environ 60 à environ 90 % en moles de téréphtalate d'éthylène et proportionnellement environ 40 à environ 10 % en moles d'isophtalate d'éthylène.

5. Ensemble barrière multicouche selon l'une quelconque des revendications 1 à 3 dans lequel ledit premier matériau liant comprend un copolymère de chlorure de vinylidène ayant une teneur en chlorure de vinylidène d'environ 80 % en poids à environ 92 % en poids.

6. Ensemble barrière multicouche selon la revendication 2 dans lequel ladite deuxième couche comprend de l'aluminium et/ou un copolymère de chlorure de vinylidène.

7. Ensemble barrière multicouche selon l'une ou l'autre des revendications 1 et 2 comprenant en outre une deuxième couche de liage thermique adjacente et sensiblement coextensive avec ladite couche de renforcement fibreuse, et une deuxième partie de barrière comprenant une deuxième couche de téréphtalate de polyéthylène bi-orienté, ladite deuxième partie de barrière étant adjacente et sensiblement coextensive avec ladite deuxième couche de liage thermique.

8. Ensemble barrière multicouche selon la revendication 7 dans lequel ladite deuxième partie de barrière comprend en outre une troisième couche adjacente et sensiblement coextensive avec ladite deuxième couche de téréphtalate de polyéthylène bi-orienté.

9. Ensemble barrière multicouche selon la revendication 8 dans lequel ladite troisième couche comprend de l'aluminium et/ou un copolymère de chlorure de vinylidène.

10. Ensemble barrière multicouche selon l'une quelconque des revendications 1 à 9 dans lequel ladite couche de renforcement fibreuse comprend un matériau tissé ou non tissé comprenant des fibres de polyester et/ou des fibres de verre et/ou des fibres de polypropylène et/ou des fibres de polyéthylène.

11. Ensemble barrière multicouche selon l'une quelconque des revendications 1 à 10 comprenant en outre :
une couche adhésive adjacente et sensiblement coextensive avec ladite première partie de barrière ou ladite couche de renforcement fibreuse ; et
une couche d'isolation thermique fibreuse adjacente et sensiblement coextensive avec ladite couche adhésive.

12. Ensemble barrière multicouche selon la revendication 11 dans lequel ladite couche adhésive comprend un deuxième matériau liant ayant une température de transition vitreuse qui est inférieure à la température de transition vitreuse de la première couche de téréphtalate de polyéthylène bi-orienté.

13. Ensemble barrière multicouche selon l'une ou l'autre des revendications 11 et 12 dans lequel ladite première partie de barrière comprend en outre une deuxième couche comprenant de l'aluminium et/ou un copolymère de chlorure de vinylidène, ladite deuxième couche étant adjacente et sensiblement coextensive avec ladite première couche de téréphtalate de polyéthylène bi-orienté.

14. Procédé de fabrication d'un ensemble barrière multicouche comprenant les étapes consistant à :
former un film composite comprenant une première partie de barrière qui comprend une première couche de téréphtalate de polyéthylène bi-orienté, et une première couche de liage thermique adjacente et sensiblement coextensive avec ladite première partie de barrière, ladite première couche de liage thermique comprenant un premier matériau liant ayant une température de transition vitreuse qui est inférieure à la température de transition vitreuse de la première couche de téréphtalate de polyéthylène bi-orienté ;
positionner une couche de renforcement fibreuse sur ladite première couche de liage thermique, ladite couche de renforcement fibreuse ayant une masse surfacique d'environ 5 g/m² à environ 30 g/m² ; et
appliquer chaleur et pression pour lier ledit film composite et ladite couche de renforcement fibreuse afin de former un ensemble pare-vapeur.

15. Procédé selon la revendication 14 comprenant en outre la formation d'une deuxième couche adjacente et sensiblement coextensive avec ladite première couche de téréphtalate de polyéthylène bi-orienté pour former au moins une portion de ladite première partie de barrière.

16. Procédé selon l'une ou l'autre des revendications 14 et 15 dans lequel ladite étape de formation d'un film composite comprend la formation de ladite première couche de liage thermique adjacente et sensiblement coextensive avec ladite première couche de téréphtalate de polyéthylène bi-orienté.

17. Procédé selon l'une quelconque des revendications 14 à 16 comprenant en outre la sélection pour ledit premier matériau liant d'une composition comprenant un copolyester amorphe d'environ 60 à environ 90 % en moles de téréphtalate d'éthylène et proportionnellement environ 40 à environ 10 % en moles d'isophtalate d'éthylène.

18. Procédé selon l'une quelconque des revendications 14 à 16 comprenant en outre la sélection pour ledit premier matériau liant d'une composition comprenant un copolymère de chlorure de vinylidène ayant une teneur en chlorure de vinylidène d'environ 80 % en poids à environ 92 % en poids.

19. Procédé selon l'une quelconque des revendications 15 à 18 dans lequel ladite étape de formation d'une deuxième couche comprend la formation de ladite deuxième couche à partir d'aluminium et/ou d'un copolymère de chlorure de vinylidène.

20. Procédé selon l'une quelconque des revendications 14 à 19 comprenant en outre le positionnement d'une deuxième couche de liage thermique sur ladite couche de renforcement fibreuse, adjacente et coextensive avec ladite couche de renforcement fibreuse, et la formation d'une deuxième partie de barrière adjacente et sensiblement coextensive avec ladite deuxième couche de liage thermique, la deuxième partie de barrière comprenant une deuxième couche de téréphtalate de polyéthylène bi-orienté.

21. Procédé selon la revendication 20 comprenant en outre la formation d'une troisième couche adjacente et sensiblement coextensive avec ladite deuxième couche de téréphtalate de polyéthylène bi-orienté pour former au moins une portion de ladite deuxième partie de barrière.

22. Procédé selon la revendication 21 dans lequel ladite étape de formation d'une troisième couche comprend la formation de ladite troisième couche à partir d'aluminium et/ou d'un copolymère de chlorure de vinylidène.

23. Procédé selon l'une quelconque des revendications 14 à 22 dans lequel ladite étape de positionnement d'une couche de renforcement fibreuse sur ladite première couche de liage thermique comprend l'utilisation dans ladite étape d'une couche de renforcement fibreuse comprenant un matériau tissé ou non tissé comprenant des fibres de polyester et/ou des fibres de verre et/ou des fibres de polypropylène et/ou des fibres de polyéthylène.

24. Procédé selon l'une quelconque des revendications 14 à 23 comprenant en outre les étapes consistant à :
positionner un adhésif sur une surface dudit ensemble pare-vapeur ;
positionner une natte d'isolation thermique adjacente et sensiblement coextensive avec ledit adhésif sur ladite surface dudit ensemble pare-vapeur ; et
appliquer de la pression pour faire adhérer ladite natte et ledit ensemble pare-vapeur.

25. Procédé selon la revendication 24 comprenant en outre la sélection pour ledit adhésif d'un deuxième matériau liant ayant une température de transition vitreuse qui est inférieure à la température de transition vitreuse de la première couche de téréphtalate de polyéthylène bi-orienté.
